(19) Europäisches Patentamt
European Patent Office
Office européen des brevets

(11) **EP 2 311 158 B1**

(12) **FASCICULE DE BREVET EUROPEEN**

(45) Date de publication et mention
de la délivrance du brevet:
**24.09.2014 Bulletin 2014/39**

(51) Int Cl.:
***H01S 3/00*** *(2006.01)*

(21) Numéro de dépôt: **09802562.0**

(22) Date de dépôt: **31.07.2009**

(86) Numéro de dépôt international:
**PCT/FR2009/000968**

(87) Numéro de publication internationale:
**WO 2010/012914 (04.02.2010 Gazette 2010/05)**

(54) **DISPOSITIF DE GENERATION D'UNE IMPULSION LASER À DUREE REDUITE**

VORRICHTUNG ZUR ERZEUGUNG EINES LASERIMPULSES VON KURZER DAUER

DEVICE FOR GENERATING A SHORT DURATION LASER PULSE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **01.08.2008 FR 0855324**

(43) Date de publication de la demande:
**20.04.2011 Bulletin 2011/16**

(73) Titulaire: **Ecole Polytechnique**
**91128 Palaiseau Cedex (FR)**

(72) Inventeurs:
• **MOUROU, Gérard**
**F-75014 Paris (FR)**
• **CHERIAUX, Gilles**
**F-94260 Fresnes (FR)**
• **RADIER, Christophe**
**F-91940 Les Ulis (FR)**

(74) Mandataire: **Novagraaf Technologies**
**122, rue Edouard Vaillant**
**92593 Levallois-Perret Cedex (FR)**

(56) Documents cités:
**US-A- 6 141 362      US-A1- 2002 018 288**

• **E. MÉVEL ET AL.: "Extracavity Compression Technique for High-Energy Femtosecond Pulses" J. OPT. SOC. AM. B, vol. 20, no. 1, janvier 2003 (2003-01), pages 105-108, XP002518721 cité dans la demande**
• **D. VILLATE ET AL.: "Beam Breakup Integral Measurement on High-Power Laser Chains" OPTICS LETTERS, vol. 32, no. 5, 1 mars 2007 (2007-03-01), pages 524-526, XP002518722**
• **L. SHAH ET AL.: "Ultrafast High Energy Amplifiers beyond the B-Integral Limit" PROC. OF SPIE, vol. 6102, 2006, pages 61020Z-1-61020Z-5, XP002518723**
• **M. SENTIS, O. UTÉZA: "Lasers et Technologies Femtosecondes" [Online] 2005, UNIVERSITÉ DE SAINT-ÉTIENNE (U. JEAN-MONNET), FRANCE , SAINT-ÉTIENNE, FRANCE , XP002518724 Extrait de l'Internet: URL:http://books.google.de/ books?id=Ffw8bQ bpoosC&hl=en> [extrait le 2009-03-09] p. 39, col. de dr., 1er paragraphe p. 42, col. de g., 1er pararaphe ISBN 9782-8627-2383-9 le document en entier**

**Description**

L'invention se rapporte à un dispositif de génération d'une impulsion laser à durée réduite.

Dans un tel dispositif, l'impulsion laser à durée réduite est obtenue par réduction de la durée d'une impulsion d'entrée.

Un objectif de l'invention est de fournir un tel dispositif de génération d'une impulsion laser à durée réduite permettant l'utilisation d'une impulsion laser d'entrée de haute énergie, typiquement supérieure au Joule, et de courte durée, typiquement de l'ordre des femtosecondes.

Les dispositifs classiques de génération d'une impulsion laser à durée réduite dans lesquels l'impulsion laser d'entrée est injectée dans des fibres optiques à effet non-linéaire pour élargir le spectre de l'impulsion laser d'entrée, tels que ceux décrits dans la publication de Schenkel et al., « Generation of 3.8 fs pulses from adaptative compression of a cascaded hollow fiber supercontinuum », ne permettent pas l'utilisation d'impulsions laser d'entrée de haute énergie du fait de l'endommagement des fibres à ce niveau d'énergie.

La publication de Shah et al., « Ultrafast high energy amplifiers beyond the B-integral limit », décrit des lasers de haute énergie utilisant des fibres optiques et s'intéresse entre - autres aux limites de l'intégrale de rupture B.

L'invention se rapporte dès lors à un dispositif de génération d'une impulsion laser à durée réduite en propagation libre, c'est-à-dire dans un milieu non guidé.

L'invention se rapporte plus particulièrement à un dispositif de génération d'une impulsion laser à durée réduite comprenant :

- des moyens de génération d'un faisceau laser d'entrée fournissant une impulsion laser d'entrée de la longueur d'onde $\lambda$;
- une lame transparente comprenant un matériau non-linéaire dispersif ayant un indice de réfraction non linéaire;
- les moyens de génération d'un faisceau laser d'entrée étant adaptés pour que le faisceau laser d'entrée ait une densité de puissance supérieure à $10^{11}$ watts par centimètre carré sur la lame afin que la lame élargisse le spectre de l'impulsion laser d'entrée par auto-modulation de phase de sorte à générer une impulsion laser à spectre élargi ;
- des moyens de compression agencés pour compresser l'impulsion laser à spectre élargi de sorte à générer l'impulsion laser à durée réduite,
- le dispositif étant caractérisé en ce que les moyens de génération d'un faisceau laser d'entrée sont adaptés pour que le faisceau d'entrée soit spatialement uniforme en amplitude sur la lame transparente et pour que l'intégrale

de rupture B= $\dfrac{2\pi}{\lambda}\displaystyle\int_{0}^{l} n_2(z).I(z)dz$ du faisceau soit inférieure à trois lorsqu'il traverse la lame transparente, $n_2(z)$ étant l'indice de réfraction de la lame transparente, $l$ étant l'épaisseur de la lame transparente, $I(z)$ étant la densité surfacique de puissance du faisceau d'entrée, et où z est selon la direction du faisceau à la traversée de la lame transparente.

Il a été constaté que l'effet d'auto-modulation de phase était obtenu pour des densités de puissance de l'impulsion laser supérieures à $10^{11}$ W.cm$^{-2}$.

Un tel dispositif est connu de la publication de Mével et al., « Extracavity compression technique for high-energy femtosecond pulses », qui vise également à permettre l'utilisation d'impulsions laser d'entrée de haute énergie, typiquement supérieure au Joule, et de courte durée, typiquement de l'ordre des femtosecondes.

Dans la publication de Mével et al., l'auto-modulation de phase permettant d'élargir le spectre de l'impulsion d'entrée est réalisée dans un milieu non guidé grâce à une lame en matériau non-linéaire BK7 sur laquelle est injectée le faisceau laser d'entrée. Une impulsion élargie comprenant de nouvelles fréquences est alors obtenue en sortie de la lame. En effet, pour des densités de puissance supérieure à $10^{11}$ W/cm$^2$ du faisceau laser reçu par la lame, un effet d'auto-modulation de phase se produit dans la lame en matériau non linéaire.

Des miroirs chirpés, c'est-à-dire à dispersion contrôlée, permettent alors de compresser cette impulsion élargie pour générer l'impulsion courte.

Dans la publication de Mével et al. précitée, le faisceau laser d'entrée est spatialement une gaussienne. Ce faisceau est focalisé sur un filtre spatial par une lentille. La lame non-linéaire est positionnée entre la lentille et le filtre spatial de sorte à générer impulsion laser à spectre élargi.

Toutefois, dans la publication de Mével susmentionnée, les effets non-linéaires sont inégaux sur l'ensemble du faisceau, de sorte que la recompression et la réduction de la durée sont inhomogènes et imparfaites.

En outre, dans la publication susmentionnée, du fait de l'utilisation d'une distribution spatiale gaussienne, un effet d'autofocalisation du faisceau se produit à la traversée de la lame non-linéaire. Ce second effet non-linéaire d'autofocalisation a pour conséquence de dégrader spatialement le faisceau laser, le rendant ainsi inutilisable et dangereux pour les optiques notamment dans le cas de faisceaux énergétiques.

Un but de l'invention est d'améliorer la qualité de la réduction de la durée d'impulsion dans un dispositif tel que décrit ci-dessus, notamment en préservant les optiques du dispositif.

Ce but est atteint par l'invention grâce au fait que les moyens de génération laser sont agencés pour que le faisceau d'entrée soit spatialement uniforme sur la lame transparente et ait une intégrale B inférieure à trois lorsqu'il traverse la lame transparente.

De la sorte, l'effet non-linéaire et l'effet dispersif de la lame sont uniformes sur l'ensemble du faisceau. Il en résulte que l'élargissement spectral par effet d'auto-modulation est uniforme, ce qui garantit une réduction uniforme de la durée sur tout le faisceau.

La qualité de la réduction de la durée de l'impulsion est donc fortement améliorée. En particulier, il a été constaté que l'invention permet d'obtenir, en sortie du dispositif, des impulsions très énergétiques dans des régimes de durée de l'ordre d'une dizaine de femtosecondes, grâce à un facteur de réduction de la durée d'impulsion par rapport à l'impulsion d'entrée de l'ordre de deux à trois. Ce facteur de réduction peut être obtenu pour une énergie de l'impulsion d'entrée supérieure à 100 joules.

Au contraire, le dispositif décrit dans la publication de Mével précitée ne permettrait pas l'utilisation d'un faisceau spatialement uniforme comme dans l'invention. En effet, la lentille convergente utilisée dans le dispositif de Mével avant la lame transparente ne permet pas d'obtenir une répartition uniforme sur la lame transparente.

On décrit maintenant des modes de réalisation avantageux de l'invention.

Par ailleurs, il est connu que l'intégrale B d'un faisceau laser de longueur d'onde $\lambda$ à la traversée dans la direction z d'un milieu d'épaisseur l ayant un indice de réfraction non linéaire $n_2(z)$ et une densité de puissance $I(z)$ se définit comme suit :

Intégrale

$$B = \frac{2\pi}{\lambda} \int_0^l n_2(z).I(z)dz$$

La valeur de l'intégrale B est importante pour un faisceau laser de haute énergie, puisque pour ces faisceaux, l'intensité est telle que des effets non linéaires se cumulent d'autant plus au fur et à mesure de l'avancement de l'impulsion dans la lame.

Pour une valeur de l'intégrale B inférieure à 3, il a été constaté que la déformation spatiale était relativement négligeable. En effet, lorsque le faisceau d'entrée uniforme, c'est-à-dire en créneau, est bruité, le bruit présente des fréquences spatiales élevées. Or, au passage dans la lame transparente, il se produit une amplification proportionnelle à une exponentielle de l'intégrale B dépendant de la fréquence. La déformation spatiale du faisceau commence alors à être significative pour des valeurs de l'intégrale B supérieures à 3.

Le facteur de compression de la durée d'impulsion obtenu grâce au dispositif de l'invention est alors de l'ordre de la valeur de l'intégrale B. Il est de précisément égal à cette valeur de l'intégrale B dans le cas idéal d'une impulsion gaussienne temporellement.

De préférence, les moyens de génération laser sont agencés pour que le faisceau d'entrée ait une intégrale B comprise entre deux et trois lorsqu'il traverse la lame transparente afin d'obtenir un facteur de compression de la durée d'impulsion sensiblement compris entre 2 et 3.

Le faisceau laser d'entrée a de préférence une densité de puissance supérieure à $10^{11}$ watts par centimètre carré sur la lame, afin de permettre l'obtention de l'effet d'auto-modulation dans la lame.

Le faisceau laser est de préférence collimaté vers la lame transparente afin d'éviter la perte de la répartition spatiale uniforme du faisceau laser d'entrée avant la lame. En particulier, comme mentionné ci-dessus, l'utilisation d'une lentille avant la lame transparente ne permettrait pas de maintenir une répartition uniforme sur la lame transparente.

Les moyens de compression peuvent comprendre au moins un miroir chirpé ou un réseau compresseur d'impulsion.

De préférence, la lame peut être une lame de silice $SiO_2$. Il a en effet été constaté que ce matériau a une bonne résistance au flux et permet d'obtenir des performances satisfaisantes pour le dispositif. La lame est transparente au faisceau laser d'entrée. La lame peut également être en verre.

Avantageusement, les moyens de génération laser peuvent comprendre un laser en amplification à dérive de fréquence. Un tel laser en amplification à dérive de fréquence, appelé en langue anglaise « Chirped Pulse amplification » ou CPA, permet d'obtenir des hautes énergies pour l'impulsion d'entrée dans le domaine femtoseconde.

Selon un mode de réalisation de l'invention, les moyens de génération laser peuvent comprendre un filtre spatial agencé pour uniformiser un faisceau laser de sorte à fournir, en sortie du filtre spatial, le faisceau laser d'entrée spatialement uniforme sur la lame. Ce mode de réalisation est avantageux lorsque le seul faisceau laser disponible n'est pas uniforme, notamment lorsqu'il n'a pas assez d'énergie. Dans ce cas, le filtre spatial permet d'uniformiser ce faisceau laser de sorte à obtenir le faisceau laser d'entrée spatialement uniforme qui est transmis vers la lame.

De préférence, l'invention comprend en outre des moyens agencés pour réinjecter le faisceau de sortie fournissant l'impulsion laser à durée réduite vers la lame transparente. De la sorte, il est possible de réaliser plusieurs passages dans la lame transparente et donc d'itérer les effets de réduction de durée d'impulsion du dispositif.

De ce cas, des moyens de filtrage spatial peuvent être agencés pour filtrer le faisceau de sortie fournissant l'impulsion laser à durée réduite avant sa réinjection dans la lame transparente. De tels moyens de filtrage permettent notamment de s'assurer que le faisceau incident sur la lame transparente, c'est-à-dire dans ce cas le faisceau réinjecté, a une intégrale B inférieure à 3.

L'invention se rapporte également à un système de génération d'une impulsion laser à durée réduite comprenant un premier dispositif tel que décrit précédemment, et un deuxième dispositif tel que décrit précédemment, et dans lequel le faisceau de sortie du premier dispositif fournissant l'impulsion laser à durée réduite est utilisé pour fournir le faisceau d'entrée dans le deuxième dispositif.

Le système peut en outre comprendre des moyens de filtrage agencés pour filtrer spatialement le faisceau de sortie du premier dispositif de sorte à générer un faisceau filtré utilisé en tant que faisceau d'entrée dans le deuxième dispositif. De tels moyens de filtrage permettent notamment de s'assurer que le faisceau incident sur la lame transparente du deuxième dispositif a une intégrale B inférieure à 3.

L'invention se rapporte également à un procédé pour générer une impulsion laser à durée réduite comprenant les étapes consistant à:

- générer un faisceau laser d'entrée fournissant une impulsion laser d'entrée de la longueur d'onde $\lambda$, le faisceau laser d'entrée ayant une densité de puissance supérieure à $10^{11}$ watts par centimètre carré sur la lame;
- transmettre le faisceau laser d'entrée vers une lame transparente comprenant un matériau non-linéaire dispersif pour que la lame élargisse le spectre de l'impulsion laser d'entrée par auto-modulation de phase de sorte à générer une impulsion laser à spectre élargi ;
- compresser l'impulsion laser à spectre élargi de sorte à générer l'impulsion laser à durée réduite ;

le procédé étant caractérisé en ce que le faisceau laser d'entrée est spatialement uniforme sur la lame, et en ce que

l'intégrale de rupture $B \approx \dfrac{2\pi}{\lambda} \displaystyle\int_{0}^{l} n_2(z).I(z)dz$ est inférieure à trois lorsqu'il traverse la lame transparente,

$n_2(z)$ étant l'indice de réfraction de la lame transparente, 1 étant l'épaisseur de la lame transparente, I(z) étant la densité surfacique de puissance du faisceau d'entrée, et où $z$ est selon la direction du faisceau à la traversée de la lame transparente.

On décrit maintenant des modes de réalisation de l'invention en référence aux figures annexées dans lesquelles :

- FIG. 1 représente schématiquement un dispositif de génération d'une impulsion laser à durée réduite selon un premier mode de réalisation de l'invention ;
- FIG. 2a à FIG. 2d représente le profil spatial et spectral de l'impulsion laser d'entrée et de l'impulsion laser à spectre élargie dans un dispositif selon l'invention ;
- FIG. 3 représente schématiquement un dispositif de génération d'une impulsion laser à durée réduite selon un deuxième mode de réalisation de l'invention ;
- FIG. 4 représente la distribution en longueur d'onde d'une impulsion d'entrée et d'une impulsion à spectre élargi selon l'invention ;
- FIG. 5 représente la largeur spectrale à mi-hauteur d'une impulsion à spectre élargi dans un dispositif selon l'invention ;
- FIG. 6 représente la durée d'une impulsion d'entrée et d'une impulsion à durée réduite dans un dispositif selon l'invention ;
- FIG. 7 représente un système comprenant une chaîne de dispositifs tels que décrits en référence aux FIG. 1 à 6;
- FIG. 8 représente des moyens de filtrage utilisés dans un système comprenant une chaîne de dispositifs tels que décrits en référence aux FIG. 1 à 6.

Sur les figures, des références numériques identiques se rapportent à des éléments techniques du même type.

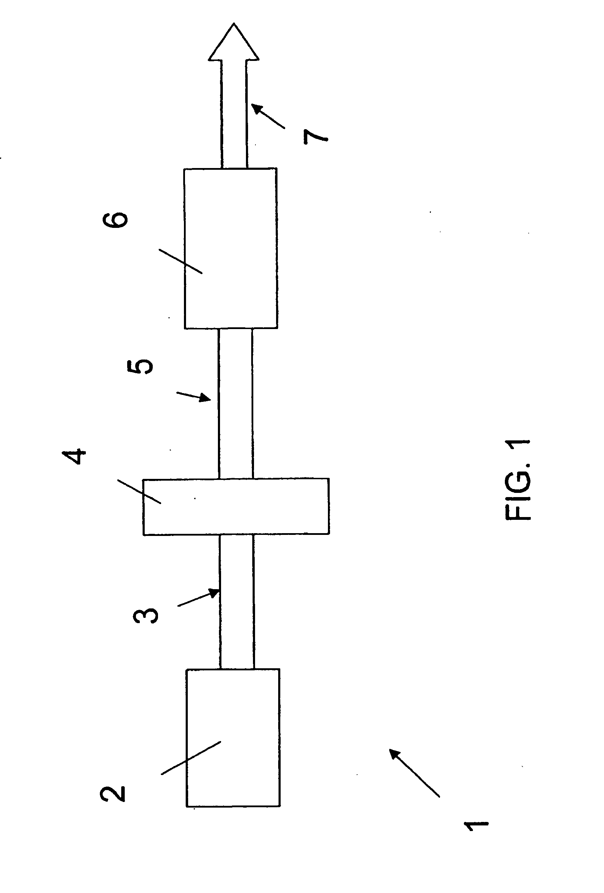

Comme illustré en FIG. 1, un dispositif 1 de génération d'une impulsion laser à durée réduite selon l'invention comprend un laser ultra-intense femtoseconde 2. Le laser ultra-intense femto-seconde 2 est par exemple un laser en amplification à dérive de fréquence également appelé laser CPA, pour « Chirped Pulse Amplification ». Le principe de fonctionnement d'un tel laser CPA par étirement temporel, amplification et recompression est bien connu.

Le laser 2 génère un faisceau laser 3 fournissant une impulsion laser dite impulsion d'entrée. La durée de l'impulsion laser est par exemple de 30 femtosecondes.

Le faisceau laser 3 est spatialement uniforme, c'est-à-dire qu'il a une forme spatiale en créneau. Cette forme spatiale en créneau est également appelée « top hat » en langue anglaise. Pour un laser 2 de forte énergie, typiquement supérieure au Joule, le faisceau laser 3 en sortie du laser 2 est d'amplitude spatiale uniforme, ce qui évite de devoir uniformiser un faisceau non uniforme et, en conséquence, de perdre une partie de l'énergie de ce faisceau.

Le faisceau laser 3 est collimaté et transmis vers une lame 4 comprenant un matériau non-linéaire, par exemple de la silice $SiO_2$ ou en verre. La lame 4 est transparente aux longueurs d'onde dans le spectre de l'impulsion d'entrée.

Le laser 2 est tel que le faisceau laser 3 a une densité de puissance supérieure à $10^{11}$ W.cm$^{-2}$ sur la lame 4, la densité de puissance étant définie comme l'énergie de l'impulsion d'entrée, divisée par le produit de la durée de l'impulsion d'entrée et de la surface du faisceau laser 3 à son entrée sur la lame 4.

Pour une telle densité de puissance, la non-linéarité du matériau de la lame 4 induit un effet d'auto-modulation de phase se produit dans la lame 4. Cet effet d'auto-modulation de phase élargit le spectre de l'impulsion d'entrée par la création de nouvelles longueurs d'onde. Le faisceau 5 en sortie de la lame 4 est donc un faisceau impulsionnel avec des impulsions ayant un spectre élargi par rapport au spectre de l'impulsion d'entrée du faisceau d'entrée 3.

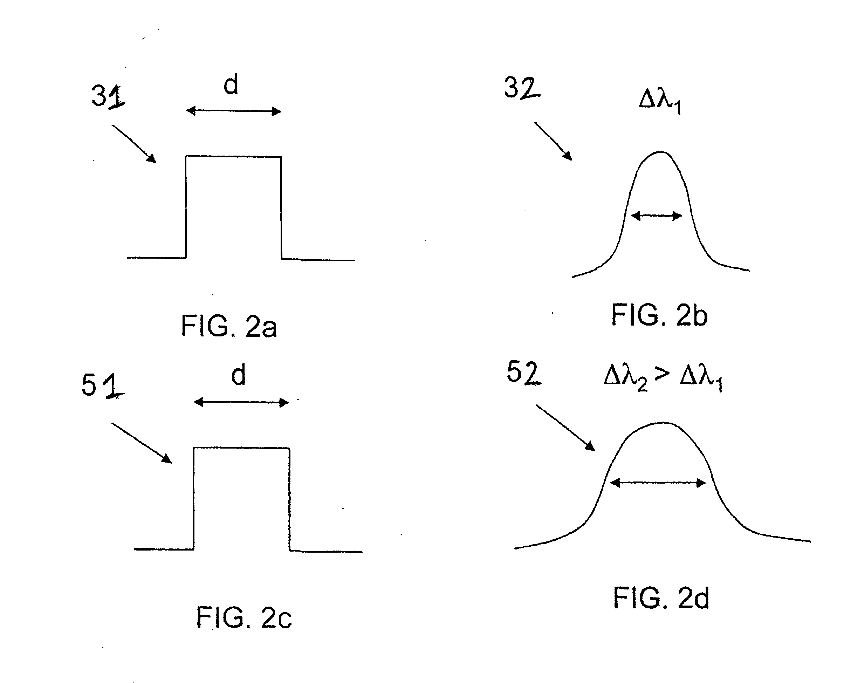

L'impulsion d'entrée 3 et l'impulsion à spectre élargi 5 sont représentées spatialement et spectralement plus en détail ci-dessous en référence aux FIG. 2a à 2d.

Le matériau constituant la lame 4 est également un matériau dispersif à dispersion positive afin de générer, en plus de l'élargissement spectral de l'impulsion, un étirement temporel de l'impulsion par dispersion des vitesses de groupe de l'impulsion.

L'ordre de grandeur $z_0$ de l'épaisseur de la lame est obtenu par les formules suivantes :

$$z_0 = \frac{t_0^2}{C}$$

où $t_0$ est la durée initiale de l'impulsion, et la grandeur C est donnée par l'expression suivante :

$$C = \frac{\lambda.D(\lambda)}{0,322.\pi^2 \, c^2}$$

avec D($\lambda$) la dispersion dans le matériau en fonction de $\lambda$, la longueur d'onde du faisceau et c la célérité dans le vide.

Par exemple,
pour $\lambda$= 1 micromètre, on obtient C =0,031 m$^{-1}$.ps$^2$,
pour $\lambda$= 800 nanomètres, on obtient C =0,080 m$^{-1}$.ps$^2$

En pratique, l'épaisseur de la lame peut également être obtenue par simulation en résolvant l'équation de Schrôdinger non-linéaire.

Le faisceau d'entrée 3 a une intégrale B inférieure à trois lorsqu'il traverse la lame transparente 4. Il est connu que l'intégrale B d'un faisceau laser de longueur d'onde $\lambda$ à la traversée dans la direction z d'un milieu d'épaisseur l ayant un indice de réfraction non linéaire $n_2(z)$ et une densité de puissance I(z) se définit comme suit :

$$\text{Intégrale de rupture} \quad B = \frac{2\pi}{\lambda} \int_0^l n_2(z).I(z)dz$$

La valeur de l'intégrale B est importante pour un faisceau laser de haute énergie, puisque pour ces faisceaux, l'intensité est telle que des effets non linéaires se cumulent d'autant plus au fur et à mesure de l'avancement de l'impulsion dans la lame. Pour une valeur de l'intégrale B inférieure à 3, il a été constaté que la déformation spatiale était relativement négligeable.

La valeur de l'intégrale B est de préférence choisie entre deux et trois afin d'obtenir un facteur de réduction de l'impulsion entre deux et trois.

Les impulsions à spectre élargi 5 sont ensuite transmises vers un compresseur 6 afin de réduire la durée de l'impulsion. Le compresseur 6 est par exemple constitué de miroirs chirpés, également appelés miroirs à dispersion contrôlée tels que ceux utilisés dans les lasers CPA. Ces miroirs chirpés sont de préférence utilisés dans le compresseur 6 en raison de leur bon seuil de dommage, de leur efficacité et de leur simplicité.

Des réseaux optiques, appelés en langue anglaise « gratings », peuvent également être utilisés pour réaliser la compression.

En sortie du compresseur 6, une impulsion dite impulsion à durée réduite 7 est obtenue. La durée de cette impulsion est en effet réduite par rapport à la durée de l'impulsion d'entrée 3.

Grâce à ce dispositif, on obtient un facteur de compression de quelques unités, typiquement deux ou trois afin de faire passer par exemple la durée d'impulsion d'une trentaine de femtosecondes à une dizaine de femtosecondes.

Cette réduction de durée est limitée par la déformation spatiale de l'impulsion. Pour une réduction de la durée d'impulsion simplement de l'ordre de deux ou trois, on évite les inconvénients de cette déformation, parmi lesquels l'amplification importante des fréquences spatiales dues au bruit qui peut endommager les matériaux pour cause de sur-intensité.

On note enfin que la propagation des impulsions est libre, c'est-à-dire non guidée dans le dispositif 1 selon l'invention, de sorte que l'énergie des impulsions utilisées n'est pas limitée par des contraintes dues au guidage, notamment par des fibres optiques. L'invention fournit donc une alternative très avantageuse à l'élargissement spectral réalisé classiquement par des fibres optiques non-linéaires, comme dans la publication de Schenkel et al. précitée.

Les FIG. 2a à 2d représentent schématiquement l'impulsion d'entrée 3 et l'impulsion à spectre élargi 5.

La FIG. 2a représente la distribution spatiale du faisceau d'entrée 3. Comme illustré sur la FIG. 2a, le faisceau d'entrée 3 est spatialement uniforme, c'est-à-dire selon un profil en forme de créneau sur le diamètre d du faisceau. Selon l'invention, ce faisceau 3 spatialement uniforme sur son diamètre, est transmis sur la lame 4.

La FIG. 2c représente la distribution spatiale du faisceau impulsionnel à spectre élargi 5 en sortie de la lame 4. Comme illustré sur la FIG. 2c, le faisceau 5 est également spatialement uniforme, c'est-à-dire qu'il a un profil en forme de créneau sur le diamètre d du faisceau.

La FIG. 2b représente la distribution spectrale du faisceau impulsionnel d'entrée 3. La largueur spectrale de l'impulsion est $\Delta\lambda_1$. La FIG. 2d représente la distribution spectrale du faisceau impulsionnel à spectre élargi 5. La largueur spectrale de l'impulsion à spectre élargi est $\Delta\lambda_2$ qui est supérieure à $\Delta\lambda_1$ du fait de l'effet d'auto-modulation dans le matériau non-linéaire précédemment décrit.

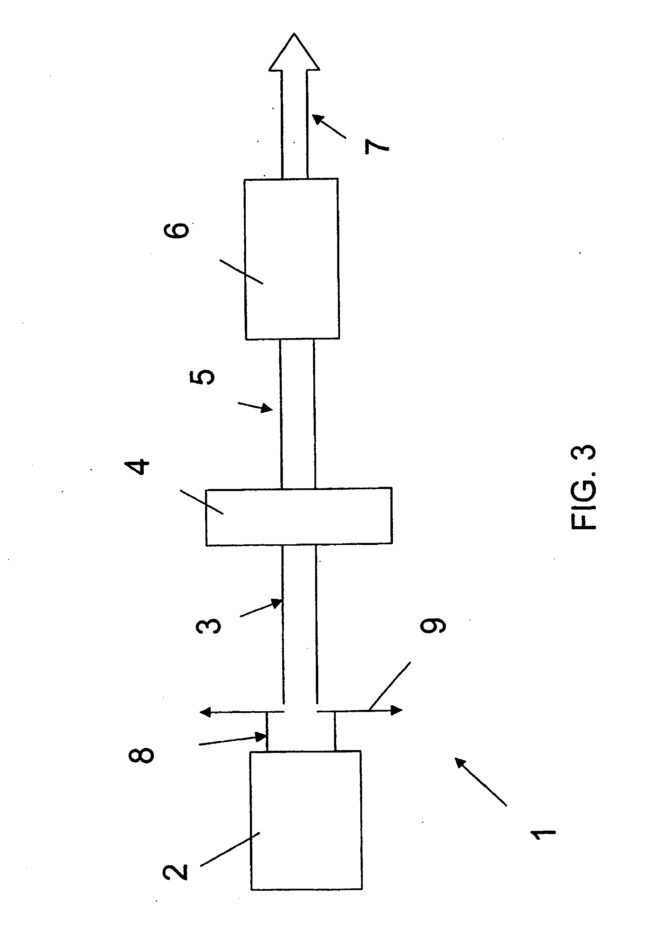

On décrit maintenant un deuxième mode de réalisation de l'invention en référence à la FIG. 3.

Sur la FIG. 3, le dispositif 1 de génération d'une impulsion laser à durée réduite comprend un laser du type CPA 2 émettant un faisceau laser 8 à une fréquence de 100 Hz. Après compression, l'impulsion associée à ce faisceau a une énergie de 13 millijoules, une largueur spectrale de 19 nanomètres, et une durée de 55 femtosecondes limitée par la distorsion de phase (1,3 fois la limite de Fourier). Le dispositif 1 comprend en outre un filtre spatial 9 constitué par un diaphragme 9 de 11 millimètres de diamètre. Le faisceau 8 est transmis à travers le diaphragme 9.

Le filtre spatial 9 est destiné à sélectionner la partie centrale spatialement uniforme du faisceau 8 de sorte à générer un faisceau laser d'entrée 3 spatialement uniforme. En effet, l'énergie du faisceau laser 8 (13 millijoules comme mentionné ci-dessus), n'est pas suffisante dans ce mode de réalisation pour obtenir directement un faisceau uniforme spatialement.

En sortie du diaphragme 9, le faisceau d'entrée 3 est spatialement uniforme et a une énergie de 9 millijoules, pour une densité de puissance environ égale à 0,17 Terawatts par centimètre carré (0,17 TW.cm$^{-2}$).

Le faisceau d'entrée 3 est collimaté vers une lame 4 de silice, SiO$_2$, de 22 millimètres d'épaisseur agissant en tant que milieu non guidé non-linéaire pour générer une impulsion à spectre élargi 5.

Vingt pourcents de l'énergie du faisceau 5 sont ensuite transmis vers une ligne 6 de prismes de compression en silice, SiO$_2$, pour compresser l'impulsion à spectre élargi 5 de sorte à obtenir en sortie du compresseur 6 une impulsion 7 à durée réduite.

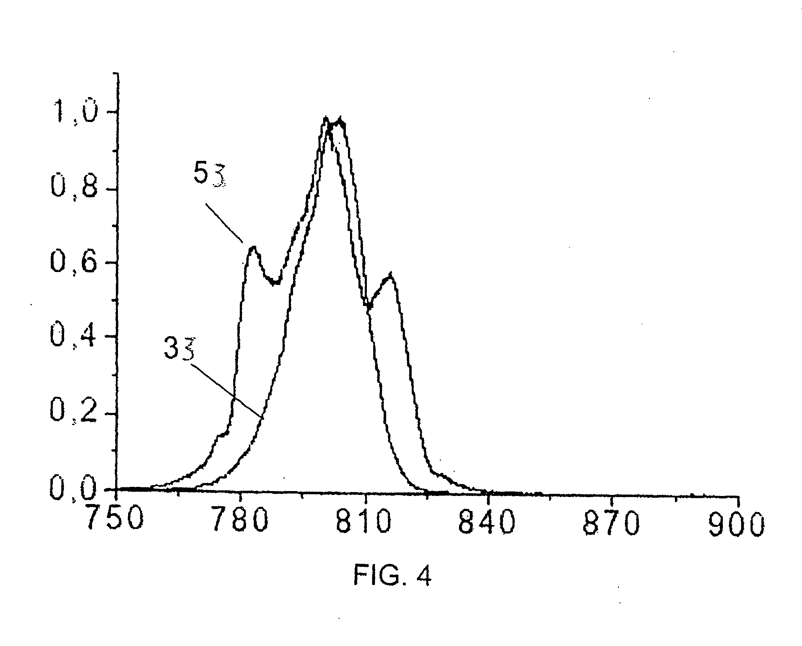

La FIG. 4 illustre la répartition spectrale normalisée en fonction de la longueur d'onde en nanomètres, pour l'impulsion d'entrée 3 et l'impulsion à spectre élargi 5. Cette figure permet d'observer les nouvelles longueurs d'onde créées par l'effet d'automodulation dû aux non-linéarités dans la lame de silice 4. Le spectre de l'impulsion d'entrée 3 a une largeur à mi-hauteur de 19 nanomètres alors que le spectre de l'impulsion à spectre élargi a une largeur à mi-hauteur de 38 nanomètres.

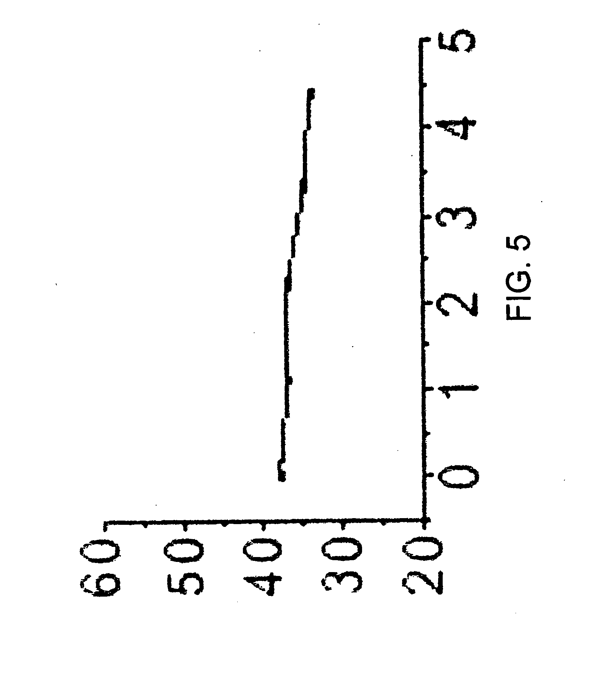

La FIG. 5 représente la largeur spectrale à mi-hauteur de l'impulsion à spectre élargi 5 en fonction de la distance au centre du faisceau impulsionnel 5. Cette figure illustre la bonne uniformité spatiale de l'effet d'élargissement spectral pour tout le faisceau.

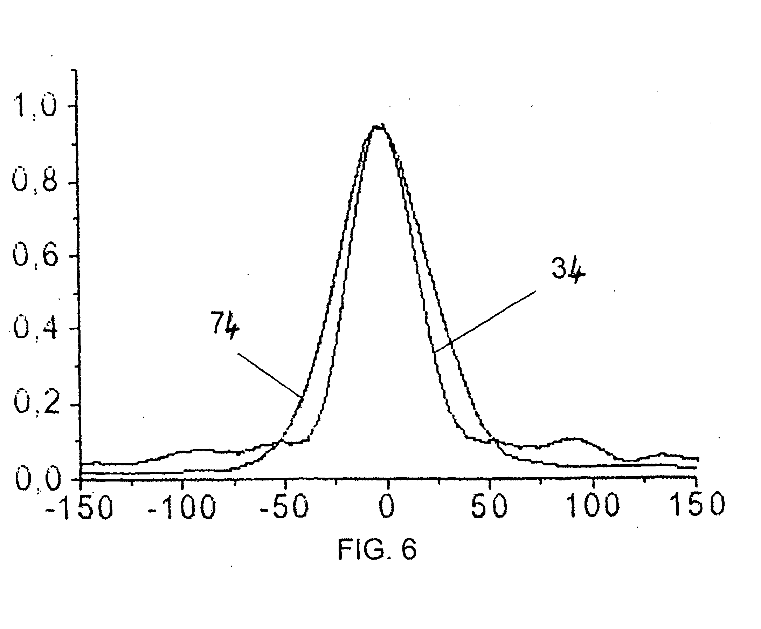

La FIG. 6 représente de façon normalisée l'impulsion d'entrée 3 et l'impulsion à durée réduite 7, c'est-à-dire l'impulsion obtenue en sortie du compresseur 6, en fonction du temps, en femtosecondes.

Sur cette figure, la durée à mi-hauteur de l'impulsion d'entrée est de 55 femtoseconde, alors que la durée à mi-hauteur de l'impulsion à durée réduite est de 33 femtosecondes.

Il en résulte une bonne réduction de la durée d'impulsion pour une énergie d'entrée relativement élevée.

Le dispositif 1 selon l'invention peut être utilisé avec des lasers intenses de l'ordre de la centaine de joules. Pour ces lasers, une durée d'impulsion de l'ordre de 15 femtosecondes peut être obtenue en sortie du dispositif 1.

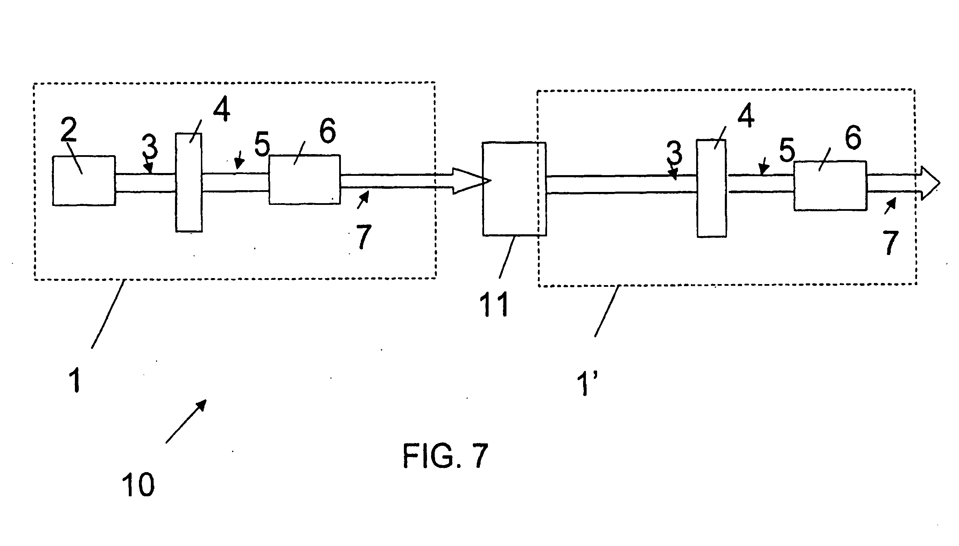

Comme illustré FIG. 7, selon un mode de réalisation de l'invention, un système 10 comprend un dispositif 1 tel que décrit précédemment générant en sortie un faisceau 7 à impulsion de durée réduite. Le système comprend en outre des moyens 11 pour filtrer spatialement le faisceau 7 de sorte à générer un faisceau filtré 12.

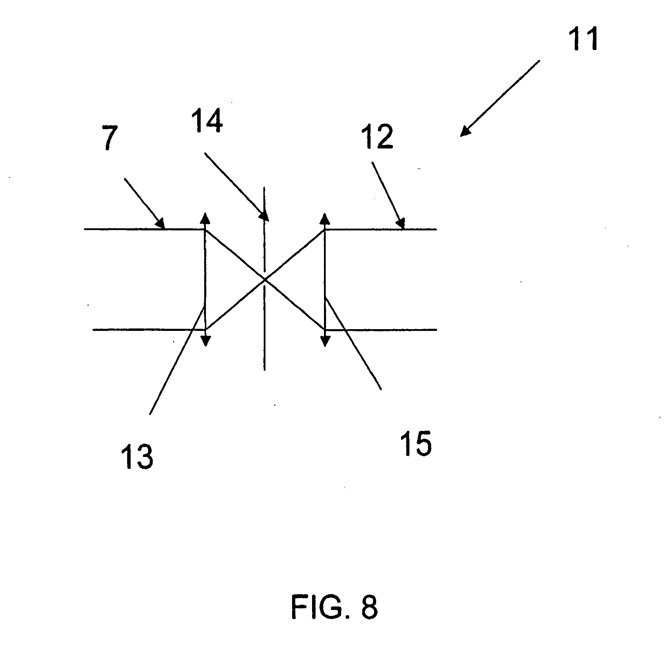

Ces moyens de filtrage 11 sont décrits plus en détail sur la FIG. 8 et comprennent par exemple une première lentille 13 focalisant le faisceau dans un diaphragme 14, et une deuxième lentille 15 pour recollimater le faisceau filtré 12.

Le faisceau filtré 12 est alors utilisé en tant que faisceau d'entrée 3 dans un dispositif 1' de génération d'une impulsion laser à durée réduite tel que décrit précédemment en référence aux figures 1 à 6.

Plus généralement, plusieurs dispositifs de génération d'une impulsion laser à durée réduite tels que décrits précédemment en référence aux figures 1 à 6 peuvent être utilisés dans un système en cascade pour obtenir, en sortie du système, une durée d'impulsion encore plus réduite.

Entre les différents dispositifs du système en cascade, on positionne de préférence des moyens 11 pour filtrer spatialement le faisceau de sortie et générer un faisceau filtré 12 utilisé en tant que faisceau d'entrée pour le dispositif suivant afin que ce faisceau d'entrée ait une intégrale B inférieure à 3.

En effet, en l'absence de ces moyens de filtrage, il a été constaté que le faisceau de sortie du premier dispositif selon l'invention pouvait avoir une intégrale B trop importante pour être directement injecté sur une lame transparente.

Grâce à ce système en cascade, il est par exemple possible d'obtenir une réduction de la durée d'impulsion d'un facteur neuf, avec deux dispositifs en cascade et, entre ces dispositifs, des moyens de filtrage 11 tels que précédemment décrits.

Le système en cascade peut être utilisé en transmission, mais également en réflexion, grâce à des miroirs. Une telle réflexion permet de réinjecter le faisceau de sortie dans la lame transparente 4, ce qui permet notamment d'utiliser la même lame transparente 4 pour plusieurs passages du faisceau. Ce mode de réalisation permet d'obtenir un dispositif plus compact.

**Revendications**

1. Dispositif (1) de génération d'une impulsion laser à durée réduite (7) comprenant :

   - des moyens de génération d'un faisceau laser d'entrée (3) fournissant une impulsion laser d'entrée de la longueur d'onde $\lambda$ ;
   - une lame transparente (4) comprenant un matériau non-linéaire dispersif ayant un indice de réfraction non linéaire;
   - les moyens de génération d'un faisceau laser d'entrée (3) étant adaptés pour que le faisceau laser d'entrée (3) ait une densité de puissance supérieure à $10^{11}$ watts par centimètre carré sur la lame afin que la lame élargisse le spectre de l'impulsion laser d'entrée par auto-modulation de phase de sorte à générer une impulsion laser à spectre élargi (5);
   - des moyens de compression (6) agencés pour compresser l'impulsion laser à spectre élargi de sorte à générer l'impulsion laser à durée réduite (7),

   le dispositif étant **caractérisé en ce que** les moyens de génération d'un faisceau laser d'entrée (3) sont adaptés pour que le faisceau d'entrée (3) soit spatialement uniforme en amplitude sur la lame transparente (4) et pour que l'intégrale de rupture B=

$$\frac{2\pi}{\lambda} \int_0^l n_2(z).I(z)dz$$ du faisceau soit inférieure à trois lorsqu'il traverse la lame transparente (4),

   $n_2(z)$ étant l'indice de réfraction de la lame transparente, $l$ étant l'épaisseur de la lame transparente, I(z) étant la densité surfacique de puissance du faisceau d'entrée (3), et où z est selon la direction du faisceau à la traversée de la lame transparente.

2. Dispositif selon la revendication précédente dans lequel les moyens de génération d'un faisceau laser d'entrée (3) sont adaptés pour que la longueur d'onde $\lambda$ et/ou la distribution spatiale de l'intensité I(z) du faisceau d'entrée (3) sont telles que l'intégrale B du faisceau soit comprise entre deux et trois lorsqu'il traverse la lame transparente.

3. Dispositif selon l'une des revendications précédentes, dans lequel le faisceau laser est collimaté vers la lame transparente.

4. Dispositif selon l'une des revendications précédentes dans lequel les moyens de compression comprennent au moins un miroir chirpé ou un réseau compresseur d'impulsion.

5. Dispositif selon l'une des revendications précédentes dans lequel la lame est une lame de silice $SiO_2$.

6. Dispositif selon l'une des revendications précédentes dans lequel la lame est une lame en verre.

7. Dispositif selon l'une des revendications précédentes dans lequel les moyens de génération d'un faisceau laser d'entrée (3) comprennent un laser en amplification à dérive de fréquence.

8. Dispositif selon l'une des revendications précédentes, dans lequel les moyens de génération d'un faisceau laser d'entrée (3) comprennent un filtre spatial constitué par un diaphragme et situé entre le laser et la lame transparente pour uniformiser un faisceau laser de sorte à fournir, en sortie du filtre spatial, le faisceau laser d'entrée (3) spatialement uniforme sur la lame.

9. Dispositif selon l'une des revendications précédentes, comprenant en outre des moyens agencés pour réinjecter le faisceau de sortie fournissant l'impulsion laser à durée réduite vers la lame transparente (4).

10. Dispositif selon la revendication précédente comprenant en outre des moyens de filtrage spatial agencés pour filtrer le faisceau de sortie fournissant l'impulsion laser à durée réduite avant sa réinjection dans la lame transparente (4).

11. Système (10) de génération d'une impulsion laser à durée réduite comprenant un premier dispositif (1) selon l'une des revendications précédentes, et un deuxième dispositif (1') selon l'une des revendications précédentes, et dans lequel le faisceau de sortie du premier dispositif fournissant l'impulsion laser à durée réduite est utilisé pour fournir le faisceau d'entrée dans le deuxième dispositif.

12. Système de génération d'une impulsion laser à durée réduite selon la revendication 11 comprenant en outre des moyens de filtrage (11) agencés pour filtrer spatialement le faisceau de sortie du premier dispositif de sorte à générer un faisceau filtré (12) utilisé en tant que faisceau d'entrée dans le deuxième dispositif.

13. Procédé pour générer une impulsion laser à durée réduite (7) comprenant les étapes consistant à:

- générer un faisceau laser d'entrée (3) fournissant une impulsion laser d'entrée de la longueur d'onde $\lambda$, le faisceau laser d'entrée (3) ayant une densité de puissance supérieure à $10^{11}$ watts par centimètre carré sur la lame ;
- transmettre le faisceau laser d'entrée vers une lame transparente (4) comprenant un matériau non-linéaire et dispersif pour que la lame élargisse le spectre de l'impulsion laser d'entrée par auto-modulation de phase de sorte à générer une impulsion laser à spectre élargi (5) ;
- compresser l'impulsion laser à spectre élargi de sorte à générer l'impulsion laser à durée réduite ;
le procédé étant **caractérisé en ce que** le faisceau laser d'entrée (3) est spatialement uniforme en amplitude sur la lame (4) et **en ce que** l'intégrale de rupture $B = \dfrac{2\pi}{\lambda} \displaystyle\int_0^l n_2(z).I(z)dz$ est inférieure à trois lorsqu'il traverse la lame transparente (4), $n_2(z)$ étant l'indice de réfraction de la lame transparente, $l$ étant l'épaisseur de la lame transparente, $I(z)$ étant la densité surfacique de puissance du faisceau d'entrée (3), et où z est selon la direction du faisceau à la traversée de la lame transparente.

**Patentansprüche**

1. Vorrichtung (1) zum Generieren eines kurzzeitigen Laserimpulses (7), umfassend:

- Mittel zum Generieren eines Eingangslaserstrahls (3), der einen Eingangslaserimpuls der Wellenlänge $\lambda$ bereitstellt;

- ein durchsichtiges Plättchen (4), das ein streuendes, nicht lineares Material mit einem nicht linearen Brechungsindex umfasst;
- wobei die Mittel zum Generieren eines Eingangslaserstrahls (3) geeignet sind, damit der Eingangslaserstrahl (3) eine Leistungsdichte von mehr als $10^{11}$ Watt pro Quadratzentimeter auf dem Plättchen aufweist, damit das Plättchen das Spektrum des Eingangslaserimpulses durch Autophasenmodulation erweitert, um einen Laserimpuls mit erweitertem Spektrum (5) zu generieren;
- Kompressionsmittel (6), die angeordnet sind, um den Laserimpuls mit erweitertem Spektrum zu komprimieren, um den kurzzeitigen Laserimpuls (7) zu generieren,
wobei die Vorrichtung **dadurch gekennzeichnet ist, dass** die Mittel zum Generieren eines Eingangslaserstrahls (3) geeignet sind, damit der Eingangsstrahl (3) auf dem durchsichtigen Plättchen (4) in der Amplitude räumlich einheitlich ist und damit das B-Integral $B = \frac{2\pi}{\lambda} \int_0^l n_2(z).I(z)dz$ des Strahls kleiner als drei ist, wenn er durch das durchsichtige Plättchen (4) geht, wobei $n_2(z)$ der Brechungsindex des durchsichtigen Plättchens ist, $l$ die Dicke des durchsichtigen Plättchens ist, I(z) die Leistungsflussdichte des Eingangsstrahls (3) ist, und wobei z von der Richtung des Strahls beim Durchgang durch das durchsichtige Plättchen abhängig ist.

2. Vorrichtung nach dem vorhergehenden Anspruch, wobei die Mittel zum Generieren eines Eingangslaserstrahls (3) geeignet sind, damit die Wellenlänge λ und/oder die räumliche Verteilung der Intensität I(z) des Eingangsstrahls (3) derartig sind, dass das B-Integral des Strahls zwischen zwei und drei liegt, wenn er durch das durchsichtige Plättchen geht.

3. Vorrichtung nach einem der vorhergehenden Ansprüche, wobei der Laserstrahl in Richtung auf das durchsichtige Plättchen kollimiert ist.

4. Vorrichtung nach einem der vorhergehenden Ansprüche, wobei die Kompressionsmittel mindestens einen gechirpten Spiegel oder ein Impulskompressionsnetz umfassen.

5. Vorrichtung nach einem der vorhergehenden Ansprüche, wobei das Plättchen ein Plättchen aus Siliziumdioxid $SiO_2$ ist.

6. Vorrichtung nach einem der vorhergehenden Ansprüche, wobei das Plättchen ein Plättchen aus Glas ist.

7. Vorrichtung nach einem der vorhergehenden Ansprüche, wobei die Mittel zum Generieren eines Eingangslaserstrahls (3) einen Verstärkungslaser mit Frequenzabweichung umfassen.

8. Vorrichtung nach einem der vorhergehenden Ansprüche, wobei die Mittel zum Generieren eines Eingangslaserstrahls (3) ein räumliches Filter umfassen, das aus einer Blende besteht und sich zwischen dem Laser und dem durchsichtigen Plättchen befindet, um einen Laserstrahl zu vereinheitlichen, um am Ausgang des räumlichen Filters den Eingangslaserstrahl (3) räumlich einheitlich auf dem Plättchen bereitzustellen.

9. Vorrichtung nach einem der vorhergehenden Ansprüche, ferner umfassend Mittel, die angeordnet sind, um den Ausgangsstrahl, der den kurzzeitigen Laserimpuls in Richtung auf das durchsichtige Plättchen (4) bereitstellt, wiedereinzukoppeln.

10. Vorrichtung nach dem vorhergehenden Anspruch, ferner umfassend räumliche Filtermittel, die angeordnet sind, um den Ausgangsstrahl, der den kurzzeitigen Laserimpuls bereitstellt, vor seiner Wiedereinkopplung in das durchsichtige Plättchen (4) zu filtern.

11. System (10) zum Generieren eines kurzzeitigen Laserimpulses, umfassend eine erste Vorrichtung (1) nach einem der vorhergehenden Ansprüche und eine zweite Vorrichtung (1') nach einem der vorhergehenden Ansprüche, wobei der Ausgangsstrahl der ersten Vorrichtung, die den kurzzeitigen Laserimpuls bereitstellt, verwendet wird, um den Eingangsstrahl der zweiten Vorrichtung bereitzustellen.

12. System zum Generieren eines kurzzeitigen Laserimpulses nach Anspruch 11, ferner umfassend Filtermittel (11), die angeordnet sind, um den Ausgangsstrahl der ersten Vorrichtung räumlich zu filtern, um einen gefilterten Strahl (12) zu generieren, der als Eingangsstrahl in der zweiten Vorrichtung verwendet wird.

**13.** Verfahren zum Generieren eines kurzzeitigen Laserimpulses (7), umfassend folgende Schritte:

- Generieren eines Eingangslaserstrahls (3), der einen Eingangslaserstrahl der Wellenlänge $\lambda$ bereitstellt, wobei der Eingangslaserstrahl (3) eine Leistungsdichte von mehr als $10^{11}$ Watt pro Quadratzentimeter auf dem Plättchen aufweist;
- Übertragen des Eingangslaserstrahls auf ein durchsichtiges Plättchen (4), das ein nicht lineares und streuendes Material umfasst, damit das Plättchen das Spektrum des Eingangslaserimpulses durch Autophasenmodulation erweitert, um einen Laserimpuls mit erweitertem Spektrum (5) zu generieren;
- Komprimieren des Laserimpulses mit erweitertem Spektrum, um den kurzzeitigen Laserimpuls zu generieren; wobei das Verfahren **dadurch gekennzeichnet ist, dass** der Eingangslaserstrahl (3) auf dem durchsichtigen Plättchen (4) in der Amplitude räumlich einheitlich ist und dass das B-Integral

$$B = \frac{2\pi}{\lambda} \int_0^l n_2(z).I(z)dz$$ kleiner als drei ist, wenn er durch das durchsichtige Plättchen (4) geht, wobei

$n_2(z)$ der Brechungsindex des durchsichtigen Plättchens ist, $l$ die Dicke des durchsichtigen Plättchens ist, I(z) die Leistungsflussdichte des Eingangsstrahls (3) ist, und wobei z von der Richtung des Strahls beim Durchgang durch das durchsichtige Plättchen abhängig ist.

**Claims**

**1.** Device (1) for generating a short-duration laser pulse (7), comprising:

- means for generating an input laser beam (3) supplying an input laser pulse of wavelength $\lambda$;
- a transparent blade (4) comprising a dispersive non-linear material having a non-linear refractive index;
- the means for generating an input laser beam (3) being adapted so that the input laser beam (3) has a power density greater than $10^{11}$ watts per square centimetre on the blade so that the blade broadens the spectrum of the input laser pulse by phase auto-modulation so as to generate a laser pulse with a broadened spectrum (5);
- compression means (6) arranged to compress the broadened-spectrum laser pulse so as to generate the short-duration laser pulse (7),

the device being **characterised in that** the means for generating an input laser beam (3) are adapted so that the input beam (3) is spatially uniform in amplitude on the transparent blade (4) and so that the rupture integral

$$B = \frac{2\pi}{\lambda} \int_0^l n_2(z).I(z)dz$$ of the beam is less than three when it passes through the transparent blade

(4), $n_2(z)$ being the refractive index of the transparent blade, $l$ being the thickness of the transparent blade, $I(z)$ being the power surface density of the input beam (3), and where z is in the direction of the beam passing through the transparent blade.

**2.** Device according to the preceding claim, wherein the means for generating an input laser beam (3) are adapted so that the wavelength $\lambda$ and/or the spatial distribution of the intensity I(z) of the input beam (3) are such that the integral B of the beam is between two and three when it passes through the transparent blade.

**3.** Device according to one of the preceding claims, wherein the laser beam is collimated towards the transparent blade.

**4.** Device according to one of the preceding claims, wherein the compression means comprise at least one chirped mirror or a pulse compression grating.

**5.** Device according to one of the preceding claims, wherein the blade is a blade made from silica $SiO_2$.

**6.** Device according to one of the preceding claims, wherein the blade is a glass blade.

**7.** Device according to one of the preceding claims, wherein the means for generating an input laser beam (3) comprise a frequency-drift amplification laser.

**8.** Device according to one of the preceding claims, wherein the means for generating an input laser beam (3) comprise a spatial filter formed by a diaphragm and situated between the laser and the transparent blade in order to make a laser beam uniform so as to supply, at the output of the spatial filter, the input laser beam (3) spatially uniform on the blade.

9. Device according to one of the preceding claims, further comprising means arranged to re-inject the output beam supplying the short-duration laser pulse towards the transparent blade (4).

10. Device according to the preceding claim, further comprising spatial filtration means arranged to filter the output beam supplying the short-duration laser pulse before re-injection thereof into the transparent blade (4).

11. System (10) for generating a short-duration laser pulse, comprising a first device (1) according to one of the preceding claims and a second device (1') according to one of the preceding claims, and wherein the output beam of the first device supplying the short-duration laser pulse is used to supply the input beam in the second device.

12. System for generating a short-duration laser pulse according to claim 11, further comprising filtration means (11) arranged to spatially filter the output beam of the first device so as to generate a filtered beam (12) used as an input beam in the second device.

13. Method for generating a short-duration laser pulse (7), comprising the steps consisting of:

- generating an input laser beam (3) supplying an input laser pulse of wavelength $\lambda$, the input laser beam (3) having a power density greater than $10^{11}$ watts per square centimetre on the blade;
- transmitting the input laser beam towards a transparent blade (4) comprising a non-linear and dispersive material so that the blade broadens the spectrum of the input laser pulse by phase auto-modulation so as to generate a broadened-spectrum laser pulse (5);
- compressing the broadened-spectrum laser pulse so as to generate the short-duration laser pulse;
the method being **characterised in that** the input laser beam (3) is spatially uniform in amplitude on the blade (4) and **in that** the rupture integral B= $\dfrac{2\pi}{\lambda} \displaystyle\int_0^l n_2(z).I(z)dz$ is less than three when it passes through the transparent blade (4), $n_2(z)$ being the refractive index of the transparent blade, $l$ being the thickness of the transparent blade, $I(z)$ being the power surface density of the input beam (3), and where z is in the direction of the beam passing through the transparent blade.

FIG. 1

EP 2 311 158 B1

31

d

FIG. 2a

32

$\Delta\lambda_1$

FIG. 2b

51

d

FIG. 2c

52

$\Delta\lambda_2 > \Delta\lambda_1$

FIG. 2d

FIG. 3

EP 2 311 158 B1

FIG. 4

FIG. 5

FIG. 6

FIG. 7

EP 2 311 158 B1

EP 2 311 158 B1

**FIG. 8**